# EUROPEAN PATENT SPECIFICATION

(11) **EP 0 999 973 B1**
(45) Date of publication and mention of the grant of the patent: **21.05.2003**
(21) Application number: 98938562.0
(22) Date of filing: 06.08.1998
(51) Int. Cl.: B62D 61/12

(54) **TRAILER**
ANHÄNGER
REMORQUE

(30) Priority: 06.08.1997 US 906905; 10.06.1998 US 96485
(43) Date of publication of application: 17.05.2000
(73) Proprietor: Briscese, Emmanuele, Manitoba R0G 1M0 (CA)
(72) Inventor: Briscese, Emmanuele, Manitoba R0G 1M0 (CA)
(74) Representative: Jones, Colin
(86) International application number: CA9800752
(87) International publication number: WO99007595

(56) References cited:
- US-A- 3 746 195
- US-A- 5 161 814

## Description

This invention relates to a vehicle which may be a trailer or other wheeled vehicle of an improved construction relative to conventional trailers which allows lowering of a frame of the trailer from a transport position for loading and unloading.

In US Patent 5,161,814 is disclosed a vehicle comprising;
a vehicle frame having at least two longitudinal beams (46) parallel to a direction of movement of the vehicle;
at least two ground wheels for supporting the frame for movement across the ground;
and at least two mounting assemblies each associated with a respective ground wheel for attaching the ground wheel to the frame;
each mounting assembly comprising:
   a first member connected to the frame for movement therewith;
   and a second pivot member having the wheel mounted thereon for rotation about a wheel axis;
   the second pivot member being pivotally movably mounted on the first member for pivotal movement relative thereto about a rotation axis parallel to and spaced from the wheel axis so as to move the wheel axis from a first raised position (66A) in which the frame is lowered to a position at or adjacent the ground to a second operating position lower than the first position in which the frame is raised for transport;
   and means for actuating said pivotal movement between the raised position and the second operating position.

It an object of the invention to provide an improved trailer which provides an improved arrangement for movement of the trailer from a raised transport position to a lowered loading/unloading position.

According to the invention there is provided a vehicle as set forth above:
CHARACTERIZED IN THAT the actuating means comprises a gear (69) carried on the second member and a pinion (70) carried on the first member for drivingly rotating the gear and thus rotating the second member relative to the first member.

One embodiment of the invention will now be described in conjunction with the accompanying drawings in which:
Figure 1 is a top plan view of the trailer according to the present invention with one side portion of the frame and the associated wheel thereon omitted for convenience of illustration.
Figure 2 is a top plan view of a center portion only of the frame of figure 1 showing the frame in an extended position.
Figure 3 is a side elevational view of the frame portion of Figure 2.

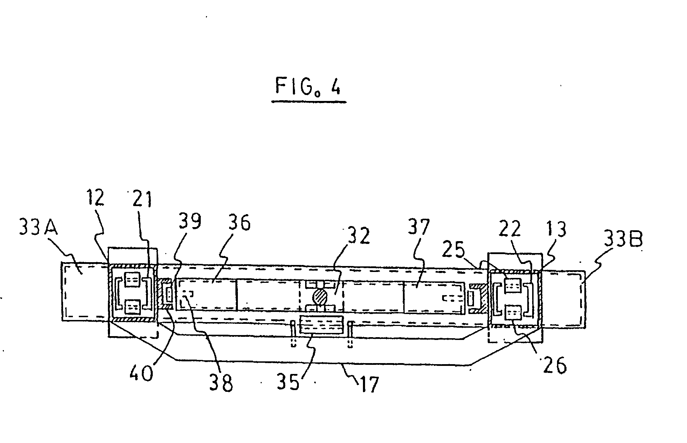

Figure 4 is a cross sectional view along the lines 4-4 of Figure 2.
Figure 5 is a top plan view, partly broken away, of the side portion only of the frame of Figure 1 on an enlarged scale showing particularly the wheel mounting assembly.
Figure 6 is view along the lines 6-6 of Figure 5.
Figure 7 is a view along the line 7-7 of Figure 5 showing the wheel mounting assembly in the first raised position of the wheel axis.
Figure 8 is a view similar of Figure 7 showing the mounting assembly in the second lowered position of the wheel axis.
Figure 9 is a top plan view of a wheel of the trailer of the above figures showing a fender for the wheel which is arranged to accommodate the lifting movement of the wheel.
Figure 10 is a front elevational view of the wheel and fender of Figure 9 showing the fender in a raised position.
Figure 11 is a front elevational view of one part only of the fender of Figures 9 and 10 showing the fender in the normal locked operating position.
Figure 12 is a front elevational view of a modified arrangement of fender.

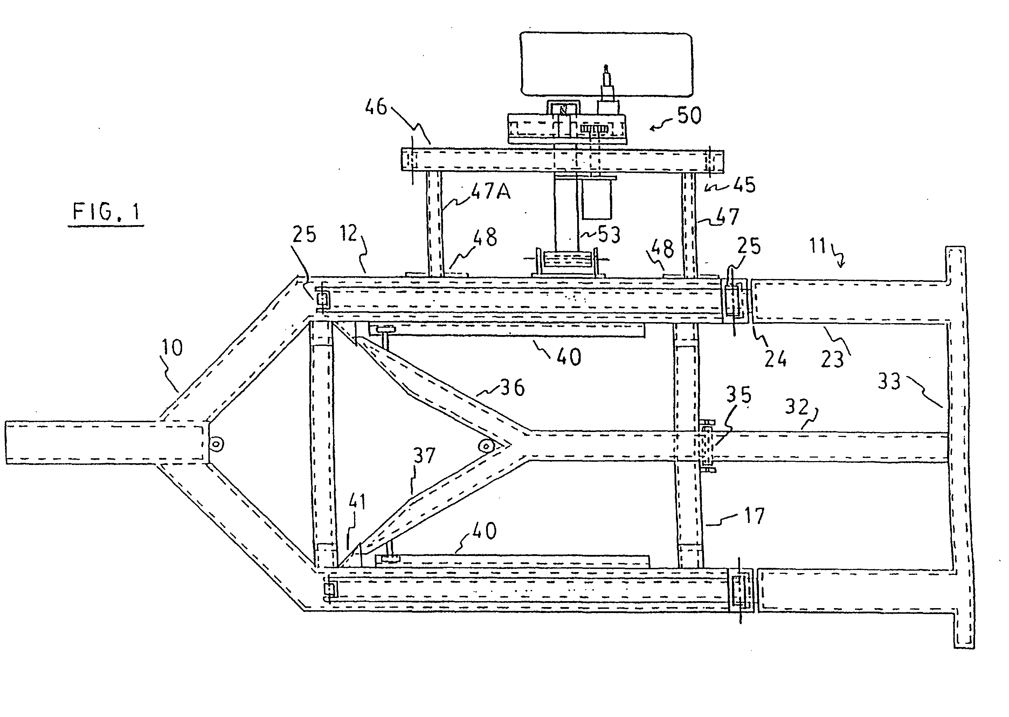

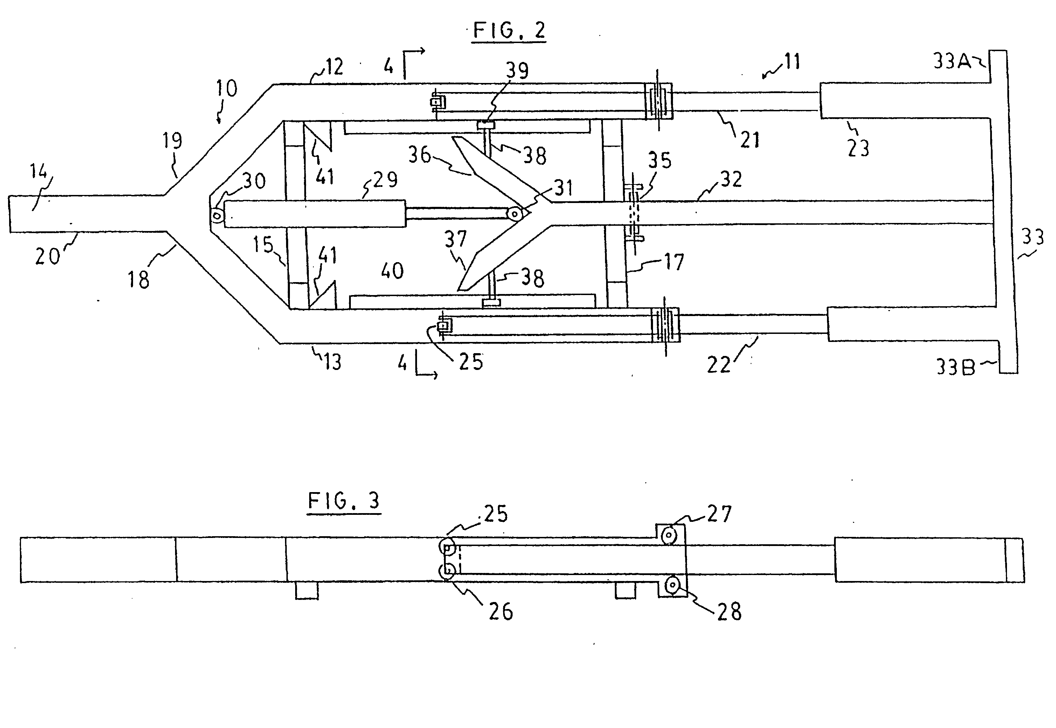

The frame of the embodiment comprises a first frame portion 10 and a second frame portion 11 which can be adjusted from an inwardly closed shorter position shown in figure 1 to an extended position shown in Figure 2.

The first frame portion 10 comprises a first beam 12 and a second beam 13 which are parallel and parallel to a direction of longitudinal movement of the trailer as indicated at 14. The beams 12 and 13 are indicated by a first transverse beam 15 and a second rear transverse beam 17. At the front of the beams 12 and 13 is provided a pair of inwardly inclined beam portions 18 and 19 which converge to central apex at which is provided a hitch pole 20 extending forwardly from the frame for attachment to a towing vehicle.

The rear or second frame portion comprises a first beam 21 and a second beam 22. Each of first and second beams 21, 22 is formed of a first tubular portion 23 of the same dimensions as a tubular portion forming the beam 12,13 and a second tubular portion of reduced dimensions for sliding inside of the tubular portion defining the beam 12,13. Thus in the retracted position shown in Figure 1, the end 24 of the portion 23 lies substantially immediately adjacent the end 25 of the beam 12. The beam 13 and the corresponding beam 22 of the second portion of the same construction.

At the forward end of the smaller beam portion of the rear frame is provided a pair of guide rollers 25, 26 which roll on the inside surfaces of the top and bottom wall of the beam 12, 13 as best shown in figure 3.

At the rear end of the beams 12 and 13 is provided a pair of rollers 27, 28 which roll on the outside surface of the smaller portion of the beams 21, 22. Thus the smaller portions of the beam 21 and 22 are guided by the pair of roller as best shown in Figure 3 for sliding movement longitudinally of the beams 12, 13.

The longitudinal sliding movement of the rear portion 11 or of the front portion 12 is then effected by a cylinder schematically indicated at 29 which is connected between a coupling 30 at the rear end of the hitch pole 20 and a coupling 31 on the rear frame portion 11.

The rear frame 11 further includes a third beam 32 parallel to and coplanar with the beams 21 and 22. The three beams are indicated by a transverse rear beam 33 defining a rear part of the frame with the rear beam extending outwardly beyond the beams 21 and 22 to form projecting portions 33A and 33B. The third beam 32 rides on a roller 35 carried on a rear upper part of the transverse beam 17. Forwardly the roller 35, the beam 32 splits into two transverse members 36 and 37 which diverge outwardly in a Y-shape toward the beams 12 and 13. Adjacent the forward end of each of the transverse members is provided a horizontal shaft 38 each of which carries a roller 39 running within a channel guide track 40 mounted on an inwardly facing surface of the respective beam 12, 13. Thus the forward end of the third beam is guided by the tracks 40 and is supported against vertical movement relative to the front frame portion 10. The coupling 31 is located at the apex between the legs of the Y-shape.

In this way the length of the frame can be adjusted from the position shown in Figure 1 which is the short position to the extend position shown in figure 2. During this movement the position of the beams of the frame are maintained in forward position so that the frame remains coplanar and is structurally sound. In the retracted position shown in Figure 2, the pointed end of each of the transverse member 36, 37 engages into a triangular receptacle 41 carried on the inwardly facing surface of the beam 12,13. The central frame section defined by the front portion 10 and the rear portion 11 is supplemented by a pair of side frame portion generally indicated at 45. The right hand frame as shown in Figure 1 but the left hand frame is omitted for convenience of illustration. Each frame portion comprises a horizontal beam 46 which is supported on the respective beam 12, 13 by a pair of inclined support struts 47, 47A. Each of the struts 47, 47A is attached to a plate 48 at its inner end bolted to the outside surface of the beam 12. Thus the beam 46 is supported at a height raise from the horizontal plane of the main frame. The beam 46 is however rigidly attached to the main frame and remains in fixed position relative to thereto.

The frame thus constructed by a pair of wheel assemblies generally indicated at 50. Again the right hand wheel assembly is shown in Figure 1 and the left hand wheel assembly is omitted for convenience of illustration. It will be appreciated that the frame portion 45 and the wheel 50 of the right is symmetrical relative to the same elements on the left hand side.

The wheel assembly 50 comprises a ground wheel 51, a wheel mounting assembly 52, a pivot arm 53 and a leaf spring 54.

The pivot arm 53 is pivotally connected by a bracket 55 attached to the beam 1 by a plate 56 intermediate the plate 48. The arm 53 can thus pivot upwardly and downwardly in a suspension movement of the wheel against the bias of the spring 54 attached to the beam 46 by couplings 54A.

Other types suspension can be used depending upon requirements and the present invention is not limited to the particular type of suspension shown and described herein.

The arm 53 projects beyond its connection to the base of the leaf spring 54 and thus provides a support for the wheel mounting 52. The wheel mounting 52 comprised a first member 60 in the form of a substantially vertical plate welded to an outer end 61 of the arm 53 and standing upwardly therefrom so the arm is attached to the bottom of the plate 60. The plate carries a spindle 62 projecting forwardly from the plate at a position directly above the arm and extending horizontally from the plate when the plate stands vertical. The angle of the plate varies during suspension movement.

The mounting assembly 52 further includes a hub 63 forming a second member of the mounting assembly which is movable relative to the first member. The hub 63 includes a central ring 64 mounted on the spindle 62 for rotation about a rotation axis 65 defined by the spindle 62. The hub 63 carries a spindle 66 for the wheel 51 defining a wheel axis 67 about which the wheel rotates on the spindle 65. The spindle 65 is located either position spaced from the spindle 62 with the axis 65 and 67 parallel.

The hub 63 includes and outer ring 68 surrounding the axis 65 with the outer ring including an inwardly facing gear 69. A pinion 70 is mounted on a shaft 71 extending through the plate 60 and carried thereby on suitable bearings. The shaft 71 is parallel to the axis 65 and drives the pinion in rotation about the axis of the shaft so as to drive the gear 69 in rotation around the axis 65. The shaft 71 is driven by a hydraulic motor 72 carried on a support plate 73 attached to the arm 53 of a position thereon spaced from the plate 60 and inwardly of the spring 54. The plate 73 is based by a triangular base 74.

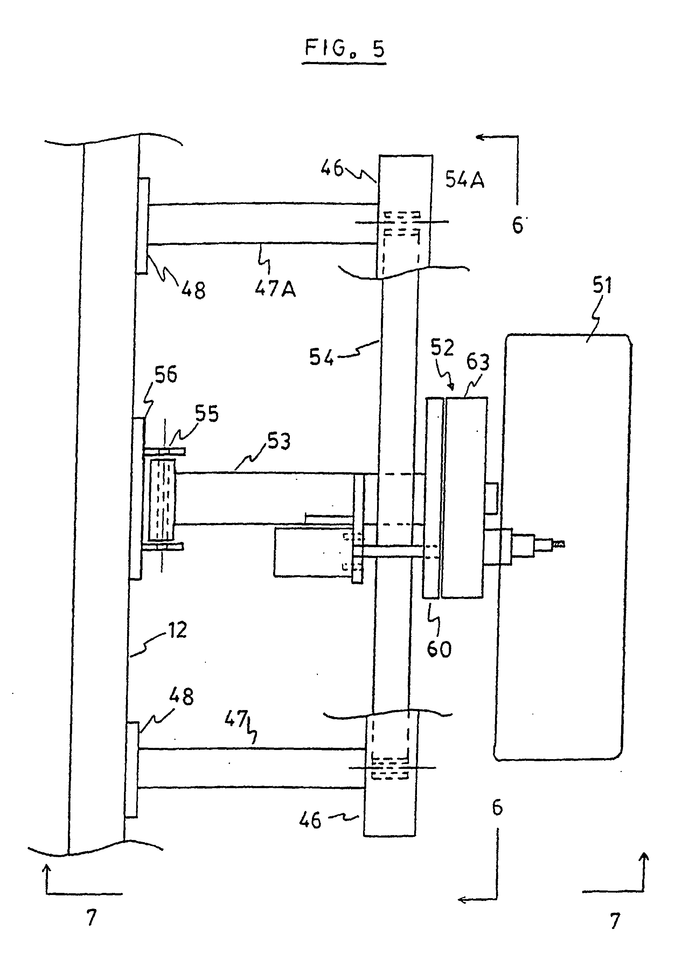

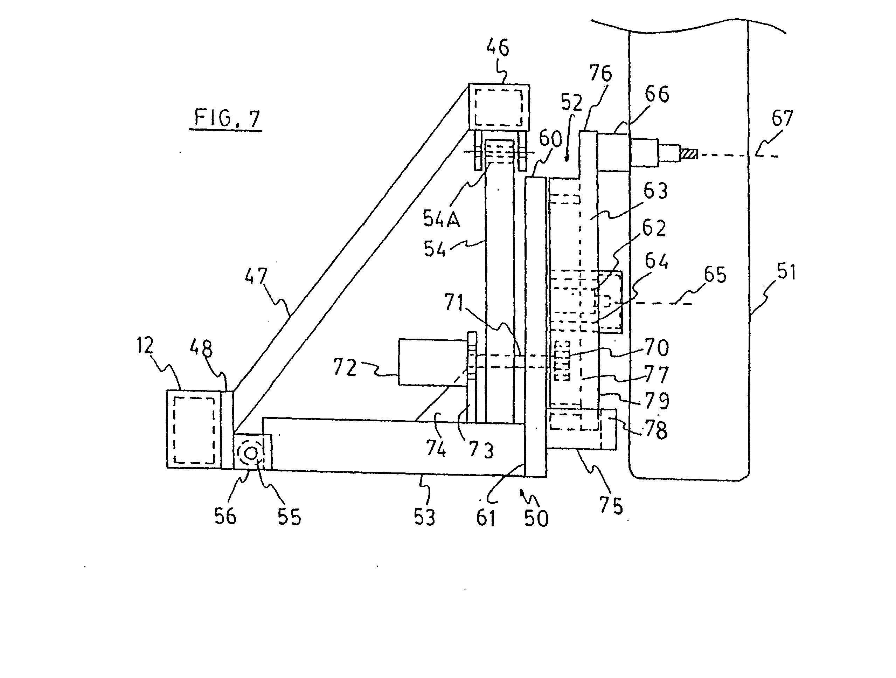

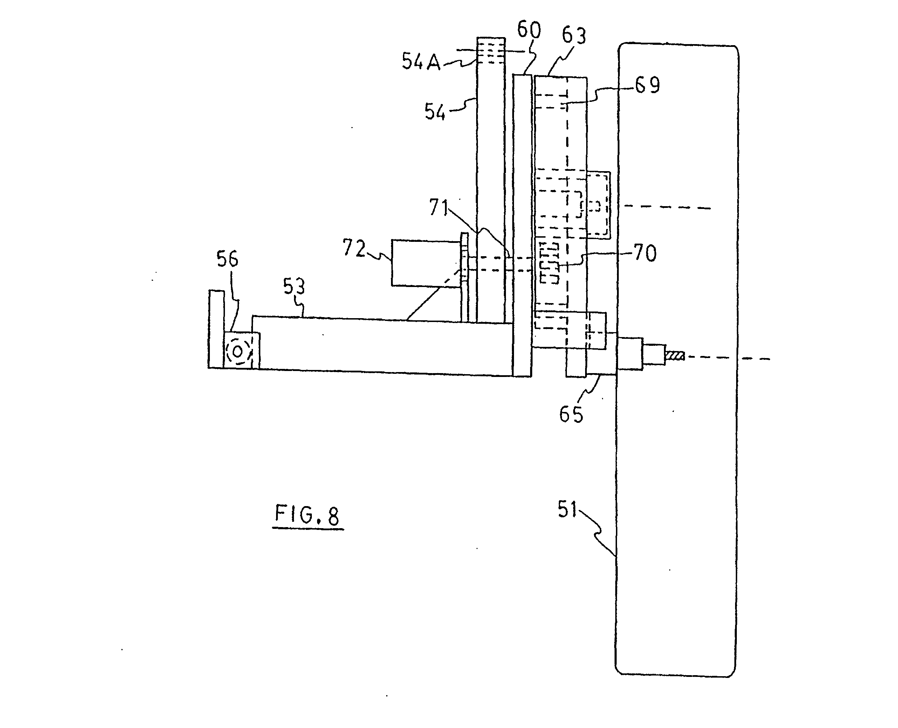

Rotation of the shaft 71 effected by the hydraulic motor 72 thus causes the pinion to drive the hub 63 around the axis 65 from the first raised position of the spindle 66 as shown in Figure 7 to the second lowered position of the spindle 66 as shown in Figures 5, 6 and 8.

In the raised position of the spindle 66 as shown in Figure 7, the spindle is moved to a top center position directly above the axis 65. In this position the wheel 51 is raised relative to the frame. The wheel 51 has a diameter arranged that such that in raised position shown in Figure 7 the frame is substantially at or adjacent ground height so that a load can be moved directly on to the trailer. The spindle 66 tends to center itself over the axis 65 due to the loading of the wheel on the hub 63 which tend to pull the hub upwardly in rotation relative to the plate 60.

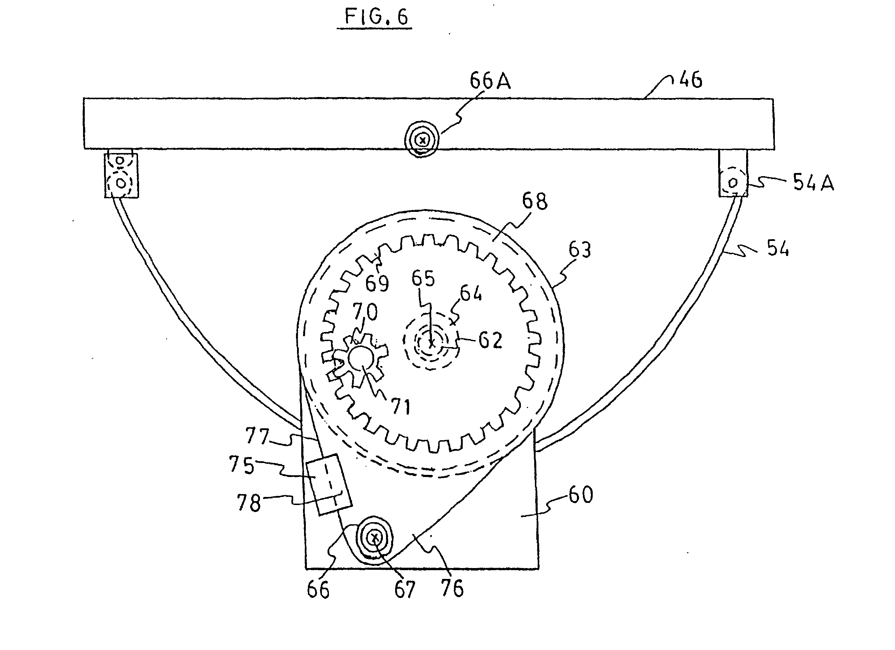

When the trailer is loaded, the motor 72 is actuated to drive the shaft 71 causing the pinion the drive the gear in a direction rotating the hub 63 from the 12 o'clock position illustrated in dotted line at 66A in Figure 6 to the 6.30 position shown in full line in Figure 6. Thus the spindle 66 in the lowered position goes just beyond the bottom centered position that is slightly over-center until the hub 63 engages against a stop 75 carried on the plate 60. Thus the hub 63 includes a lobe 76 projecting outwardly to one side of the ring 68 with the lobe defining a side wall 77 which engages against the stop 75. The stop forms a surface which is oriented to engage the surface 77 when the lobe moves to the required position holding the spindle 66 at the 6.30 position.

In addition the stop 75 includes an end plate portion 78 projecting beyond a front face 79 of the hub 63. The end plate portion 78 defines a lip which is in sliding contact with the front face 79 so as to hold that front face against movement away from the plate 60. The lip 78 thus takes loading from the spindle 62 and insures that excessive loading on the spindle 65 tending to twist the bottom of the hub away from the plates 60 is resisted by the inter-engagement between the lip 78 and the surface 79.

The trailer therefore the present invention allows the frame of the trailer to be lowered to the ground for loading and the frame of the trailer to be lifted for transport. The lifting action is effected using hydraulic action without operator involvement in latching or unlatch elements.

In addition the trailer can be adjusted in length to accommodate different loads with the whole of the frame including the adjustable rear portion being movable in the vertical direction for the loading action.

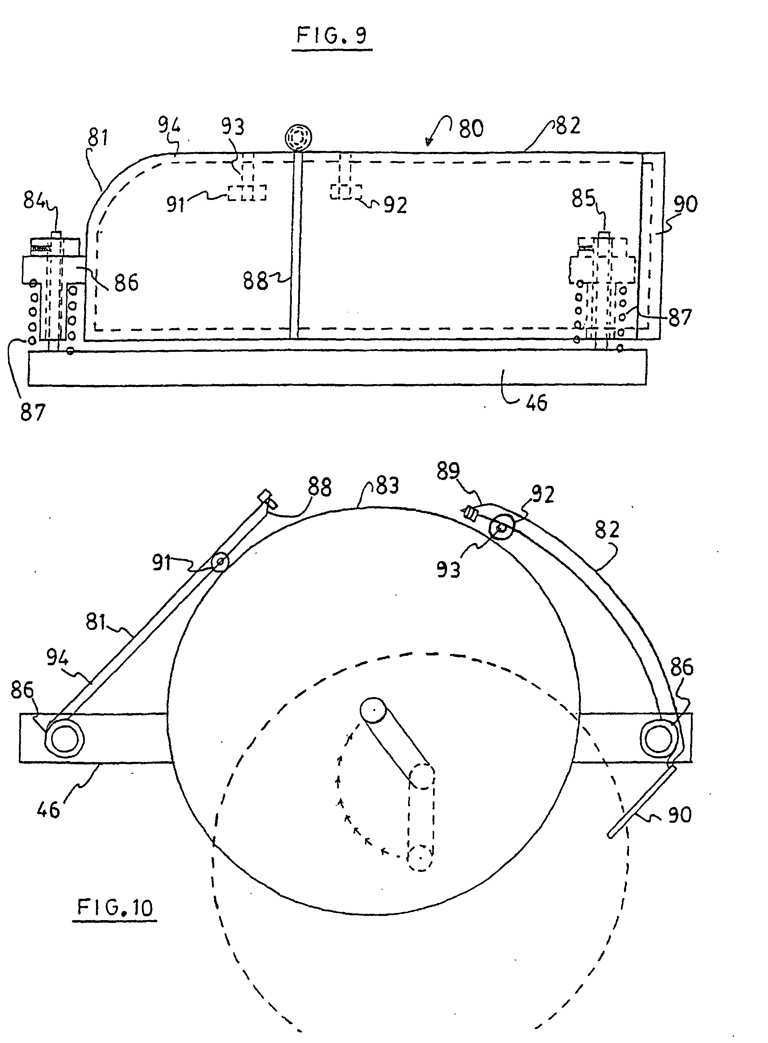

Turning now to Figures 9, 10 and 11 there is shown a fender for the trailer as shown and described above. During upward movement of the wheel for the lowering of the trailer frame to the ground, it is necessary for the fender to accommodate this upward movement. The normal position of the fender just above the wheel during transport movement of the trailer is necessary to prevent release of water, mud and other materials from the road and therefore in the normal position of the trailer, the fender is closely adjacent the wheel. When the wheel is raised, however, the fender must accommodate this movement.

One technique for accommodating movement is shown in Figures 9, 10 and 11 wherein there is provided a fender 80 forming two parts 81 and 82. The fender is mounted on the frame member 46 and projects outwardly therefrom over the wheel 83.

Each fender piece 81, 82 is mounted on a respective one of a pair of pins 84 and 85 mounted on a projecting outwardly from the frame member 46. Thus each fender piece 81, 82 includes a sleeve 86 surrounding the respective pin which is attached to the fender portion by any suitable technique such as welding. The sleeve 86 is arranged at the forward end of the portion 81 and at the rearward end of the portion 82. The sleeve can thus rotate around the pin allowing the fender portion to raise and lower as required. A spring 87 biases the fender portion into the lowered position.

The fender portion 81 is the forward portion and extends from the sleeve 86 on the pin 84 to a rearward edge 88 which is chamfered as indicated in Figure 10.

The rearward portion 82 has a forward chamfered end 89 which matches the chamfered end 88 so that the end 88 rests over the end 89. The sleeve 86 of the portion 82 is arranged at the rearward end and behind the sleeve is provided a downwardly depending mud flap 90. Each portion carries a roller 91, 92 which contacts the peripheral surface of the wheel as the wheel is raised upwardly so as to push the portions upwardly as the wheel is raised. The roller is carried on a pin 93 projecting inwardly from an outer flange 94 of the fender.

The fender portions can be locked in place by a pair of locking members 94 and 95 mounted on one edge of the fender, which can be the inside edge, the outside edge or both edges, at the chamfered edges 88 and 89. The locking member 94 comprises an upper cap portion carrying a depending pin 96. The lower locking member 95 comprises a sleeve having an internal bore 97 into which the pin 96 seats. Thus locking members are held together during normal operation so that the fender remains as a single unit until the pin 96 is pulled at the time of raising the wheels to allow the fender portions to be pushed upwardly as shown in Figure 10.

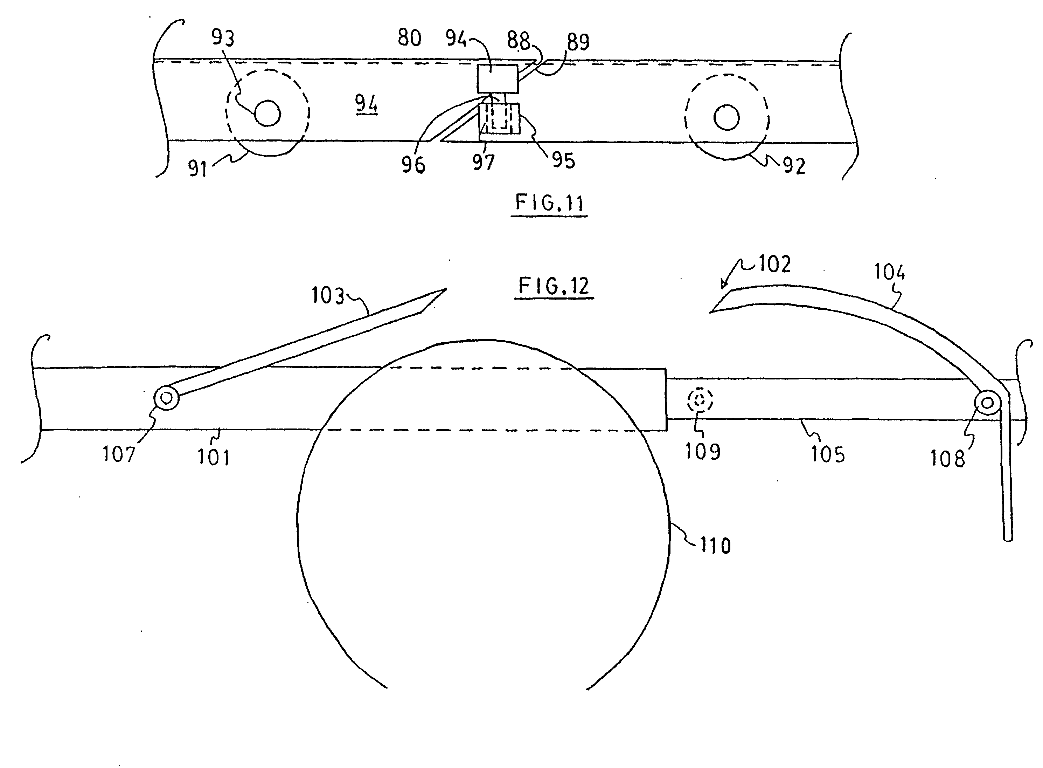

An alternative arrangement is shown in Figure 12 where the side frame member 101 carries the fender generally indicated at 102 formed by two fender portions 103 and 104 substantially as previously described. In this embodiment the frame member 101 includes an extension portion 105 which slides inside the tubular frame member 101 so as to allow the frame member to extend. In this embodiment the front portion 103 is mounted on a sleeve and pin arrangement 107 as previously described. In this embodiment the rear portion 104 is mounted on a similar sleeve and pin arrangement as indicated at 108. The sleeve and pin 107 is mounted on the frame members 101. The sleeve and pin 108 is mounted on the frame member 105 and is therefore movable rearwardly as the frame is extended by pulling out the extension portion 105. The sleeve and pin arrangement 108 therefore moves from an initial position as shown at 109 in the normal operating position of the fender to an extended position as shown at 108. In this embodiment, therefore, instead of the rear portion pivoting upwardly on the spring, the rear portion remains at a fixed height but is instead moved horizontally away from the position of the wheel 110 allowing the wheel to move upwardly and providing a pushing action only on the forward portion 103.

The fender can also be designed for use with a dual axle arrangement in which the length of one or both portions is increased to accommodate the length of the wheels on the dual axle.

While this application refers to and is primarily concerned with a trailer construction, the same principles can be applied to any wheeled vehicle where a wheel supports a frame and allows the frame to be raised and lowered for loading.

## Claims

1. A vehicle comprising;
a vehicle frame (11) having at least two longitudinal beams (46) parallel to a direction of movement of the vehicle;
at least two ground wheels (51) for supporting the frame for movement across the ground;
and at least two mounting assemblies (52) each associated with a respective ground wheel for attaching the ground wheel to the frame;
each mounting assembly comprising:
a first member (60) connected to the frame for movement therewith;
and a second pivot member (63) having the wheel mounted thereon for rotation about a wheel axis (67);
the second pivot member being pivotally movably mounted on the first member for pivotal movement relative thereto about a rotation axis (65) parallel to and spaced from the wheel axis so as to move the wheel axis from a first raised position (66A) in which the frame is lowered to a position at or adjacent the ground to a second operating position (66) lower than the first position in which the frame is raised for transport;
and means (69,70) for actuating said pivotal movement between the raised position and the second operating position,
**CHARACTERIZED IN THAT** the actuating means comprises a gear (69) carried on the second member and a pinion (70) carried on the first member for drivingly rotating the gear and thus rotating the second member relative to the first member.

2. The vehicle according to Claim 1 wherein the actuating means is arranged such that in the first raised position the wheel axis (67) is substantially directly above the rotation axis (65) and in the second operating position the wheel axis (67) is moved through an angle substantially equal to 180 degrees such that the wheel axis is substantially directly below the rotation axis (65).

3. The vehicle according to Claim 1 or 2 wherein the pinion (70) is driven by a motor (72), the first member (60) includes a substantially vertical plate and wherein the second member (63) is mounted for said pivotal movement on the plate outside of the plate and wherein the motor is mounted inwardly of the plate with the shaft of the motor passing through the plate for engaging the gear (69) of the second member (63).

4. The vehicle according to Claim 3 wherein the second member (63) comprises a hub having a main hub plate parallel to the plate of the first member (60) with an annular rim (64) attached to the main hub plate and projecting therefrom toward the plate of the first member, the gear (69) being defined on a surface of the annular rim facing toward the axis.

5. The vehicle according to Claim 4 wherein there is provided interengaging elements (78,79) on the main hub plate and the plate for preventing twisting of the hub plate away from the plate when in the second operating position.

6. The vehicle according to Claim 1, 2, 3, 4 or 5 wherein in the second operating position the wheel axis moves to a position just beyond a bottom center position and wherein there is provided on the first member a stop (75) for locating the second member with the wheel axis in the second operating position just beyond bottom dead center such that vertical loads on the wheel tend to push the second member against the stop.

7. The vehicle according to any preceding Claim wherein the frame comprises;
a front frame portion (10) and a rear frame portion (11);
the ground wheels (50) being attached to the front frame portion for supporting the front frame portion such that the rear frame portion is supported relative to the ground solely from the front frame portion;
the rear frame portion including support members (21,22) mounted on the front frame portion and arranged so as to provide forward and rearward sliding movement of the support members and the rear frame portion relative to the front frame portion between a forward retracted position and a rearward extended position;
the rear frame portion including rear load supporting frame members (23) arranged beyond a rearward end of the front frame portion and arranged to support a rearward part of a load on the vehicle;
and the rear frame portion including, in addition to the support members (21,22), a forward load supporting frame member (32) extending from the rear frame portion (23) forwardly therefrom so as to be located, in a retracted position, at a forward part of the front frame portion.

8. The vehicle according to any preceding claim further comprising a fender (80) mounted on the vehicle frame for covering the wheel during transport, the fender including at least a portion (81,82) thereof which is mounted for pivotal movement about a generally horizontal axis (86) to move upwardly with the wheel when contacted by the wheel.

9. The vehicle according to Claim 8 wherein the fender is formed from two portions (81,82) divided at a line (88) above the wheel each of which is mounted for pivotal movement about a respective pivot axis (86) and wherein the portions include a locking device (95) for locking the portions together in the transport position.

10. The vehicle according to Claim 8 or 9 wherein the frame includes an extension portion (105) movable longitudinally of the frame and wherein the fender includes a portion (104) mounted on the extension portion of the frame so as to be movable therewith to a position spaced away from the wheel to allow the upward movement of the wheel.

## Patentansprüche

1. Fahrzeug, umfassend:
einen Fahrzeugrahmen (11) mit mindestens zwei zu einer Bewegungsrichtung des Fahrzeuges parallelen Längsträgern (46);
mindestens zwei Bodenrädern (51) zum Tragen des Rahmens für die Bewegung über den Boden; und
wenigstens zwei Montagebaugruppen (52), die jeweils einem Bodenrad zugeordnet sind, zum Befestigen des Bodenrades an dem Rahmen;
wobei jede Montagebaugruppe umfasst:
ein erstes Bauteil (60), das beweglich mit dem Rahmen verbunden ist; und
ein zweites Drehbauteil (63), an dem das Rad zur Drehung um eine Radachse (67) befestigt ist;
wobei das zweite Drehbauteil drehbar an dem ersten Bauteil für eine zu ihm relative Drehbewegung um eine Drehachse (65) befestigt ist, welche parallel und beabstandet zur Radachse liegt, um so die Radachse von einer ersten angehobenen Position (66A), in der der Rahmen in eine Position am oder benachbart zum Boden abgesenkt ist, in eine zweite Betriebsposition (66), die niedriger als die erste Position ist und in welcher der Rahmen zum Transport angehoben ist, zu bewegen; und
Mittel (69, 70) zum Antrieb der Drehbewegung zwischen der angehobenen Position und der zweiten Betriebsposition,
**DADURCH GEKENNZEICHNET, DASS**
das Mittel zum Antrieb ein auf dem zweiten Bauteil gelagertes Zahnrad (69) und ein auf dem ersten Bauteil gelagertes Ritzel (70) umfasst, um das Zahnrad treibend zu bewegen und somit das zweite Bauteil bezüglich des ersten Bauteiles zu drehen.

2. Fahrzeug nach Anspruch 1, wobei das Mittel zum Antreiben derart angeordnet ist, dass die Radachse (67) in der ersten angehobenen Position im Wesentlichen direkt über der Drehachse (65) liegt und in der zweiten Betriebsposition die Radachse (67) über einen Winkel von im Wesentlichen gleich 180 Grad bewegt wird, so dass die Radachse im Wesentlichen direkt unter der Drehachse (65) liegt.

3. Fahrzeug nach Anspruch 1 oder 2, wobei das Ritzel (70) durch einen Motor (72) angetrieben ist, das erste Bauteil (60) eine im Wesentlichen vertikale Platte enthält und wobei das zweite Bauteil (63) für die Drehbewegung an der Platte außen von der Platte befestigt ist und wobei der Motor von der Platte aus innen liegend angebracht ist und die Motorwelle durch die Platte hindurch geht, um das Zahnrad (69) des zweiten Bauteiles (63) in Eingriff zu bringen.

4. Fahrzeug nach Anspruch 3, wobei das zweite Bauteil (63) eine Nabe umfasst, die eine Hauptnabenplatte aufweist, die parallel zur Platte des ersten Bauteiles (60) ist, mit einem ringförmigen Kranz, der an der Hauptnabenplatte angebracht ist und von ihr zur Platte des ersten Bauteiles hin vorspringt, wobei das Zahnrad (69) auf einer zur Achse hin gerichteten Fläche des ringförmigen Kranzes festgelegt ist.

5. Fahrzeug nach Anspruch 4, wobei Zwischeneingriffsmittel (78, 79) auf der Hauptnabenplatte und der Platte vorgesehen sind, um das Wegdrehen der Hauptnabenplatte von der Platte zu verhindern, wenn sie sich in der zweiten Betriebsposition befindet.

6. Fahrzeug nach Anspruch 1, 2, 3, 4 oder 5, wobei sich die Radachse in der zweiten Betriebsposition in einer Position gerade über eine untere Mittenposition hinaus bewegt und wobei an dem ersten Bauteil ein Anschlag (75) vorgesehen ist zur Festlegung der Radachse des zweiten Bauteiles in der zweiten Betriebsposition gerade über den unteren Todpunkt hinaus, so dass senkrechte Lasten auf das Rad bestrebt sind, das zweite Bauteil gegen den Anschlag zu drücken.

7. Fahrzeug nach einem der vorherigen Ansprüche, wobei der Rahmen umfasst;
einen vorderen Rahmenabschnitt (10) und einen hinteren Rahmenabschnitt (11);
wobei die Bodenräder (50) an dem vorderen Rahmenabschnitt angebracht sind, um den vorderen Rahmenabschnitt zu tragen, so dass der hintere Rahmenabschnitt bezüglich des Bodens alleine vom vorderen Rahmenabschnitt getragen wird;
wobei der hintere Rahmenabschnitt Stützelemente (21, 22) enthält, die am vorderen Rahmenabschnitt befestigt sind, um so für eine bezüglich des vorderen Rahmenabschnittes gleitende Bewegung nach vorne und nach hinten der Stützelemente und des hinteren Rahmenabschnittes zwischen einer nach vorne hin zurückgezogenen Position und einer nach hinten hin ausgestreckten Position zu sorgen;
wobei der hintere Rahmenabschnitt Rahmenstützelemente (23) für eine hintere Last enthält, die über ein hinteres Ende des vorderen Rahmenabschnittes hinaus angeordnet sind und dafür geeignet sind, einen hinteren Teil einer Last auf dem Fahrzeug abzustützen; und
wobei der hintere Rahmenabschnitt zusätzlich zu den Stützelementen (21, 22) ein Rahmenstützelement (32) für eine vordere Last enthält, das sich vom hinteren Rahmenabschnitt (23) aus nach vorne erstreckt, um so in einer zurückgezogenen Position an einem vorderen Teil des vorderen Rahmenabschnittes festgelegt zu werden.

8. Fahrzeug nach einem der vorherigen Ansprüchen, weiter umfassend eine am Fahrzeugrahmen angebrachte Schutzhaube (80), um das Rad während des Transportes abzudecken, wobei die Schutzhaube wenigstens einen Abschnitt (81, 82) enthält, der für die Drehbewegung um eine im Allgemeinen horizontale Achse (86) befestigt ist, um sich mit dem Rad nach oben zu bewegen, wenn sie vom Rad berührt wird.

9. Fahrzeug nach Anspruch 8, wobei die Schutzhaube von zwei Abschnitten (81, 82) gebildet wird, die an einer Linie (88) über dem Rad abgeteilt sind, wobei jeder drehbar um jeweils eine Drehachse (86) befestigt ist und die Abschnitte eine Verriegelungsvorrichtung (95) enthalten zur Verriegelung der Abschnitte miteinander in der Transportposition.

10. Fahrzeug nach Anspruch 8 oder 9, wobei der Rahmen einen Verlängerungsabschnitt (105) enthält, der längs des Rahmens bewegbar ist, und wobei die Schutzhaube einen an dem Verlängerungsabschnitt des Rahmens angebrachten Abschnitt (104) enthält, um damit so in eine vom Rad beabstandete Position bewegbar zu sein, um die Bewegung des Rades nach oben zu erlauben.

## Revendications

1. Véhicule comprenant :
un châssis de véhicule (1) comportant au moins deux longerons longitudinaux (46) parallèles à une direction de mouvement du véhicule ;
au moins deux roues (51) pour supporter le châssis pour un mouvement sur le sol ;
et au moins deux ensembles de montage (52) associés chacun à une roue respective pour fixer la roue au châssis ;
chaque ensemble de montage comprenant :
un premier élément (60) relié au châssis pour se déplacer avec celui-ci ;
et un deuxième élément de pivot (63) sur lequel est monté la roue pour tourner autour d'un axe de roue (67) ;
le deuxième élément de pivot étant monté de manière pivotante et mobile sur le premier élément pour effectuer un mouvement de pivotement par rapport à celui-ci autour d'un axe de rotation (65) parallèle à l'axe de roue et espacé de celui-ci de manière à déplacer l'axe de roue d'une première position élevée (66A), dans laquelle le châssis est abaissé à une position au sol ou à proximité de celui-ci, jusqu'à une deuxième position de fonctionnement (66) plus basse que la première position, dans laquelle le châssis est élevé pour son transport ;
et des moyens (69, 70) pour effectuer ledit mouvement de pivotement entre la position élevée et la deuxième position de fonctionnement,
**caractérisé en ce que** les moyens d'actionnement comprennent un engrenage (69) supporté sur le deuxième élément et un pignon (70) supporté sur le premier élément pour faire tourner l'engrenage de manière entraînante et ainsi faire tourner le deuxième élément par rapport au premier élément.

2. Véhicule selon la revendication 1, dans lequel les moyens d'actionnement sont agencés de telle sorte que, dans la première position élevée, l'axe de roue (67) soit sensiblement directement au-dessus de l'axe de rotation (65) et, dans la deuxième position de fonctionnement, l'axe de roue (67) soit déplacé d'un angle sensiblement égal à 180 degrés de telle sorte que l'axe de roue soit sensiblement directement au-dessous de l'axe de rotation (65).

3. Véhicule selon la revendication 1 ou 2, dans lequel le pignon (70) est entraîné par un moteur (72), le premier élément (60) comprend une plaque sensiblement verticale, et dans lequel le deuxième élément (63) est monté pour ledit mouvement de pivotement sur la plaque, à l'extérieur de la plaque, et dans lequel le moteur est monté intérieurement à la plaque, l'arbre du moteur passant à travers la plaque pour se mettre en prise avec l'engrenage (69) du deuxième élément (63).

4. Véhicule selon la revendication 3, dans lequel le deuxième élément (63) comprend un moyeu comportant une plaque de moyeu principale parallèle à la plaque du premier élément (60), une couronne annulaire (64) étant fixée à la plaque de moyeu principale et faisant saillie de celle-ci vers la plaque du premier élément, l'engrenage (69) étant défini sur une surface de la couronne annulaire orientée vers l'axe.

5. Véhicule selon la revendication 4, dans lequel des éléments se mettant en prise mutuellement (78, 79) sont prévus sur la plaque de moyeu principale et sur la plaque pour éviter une torsion de la plaque de moyeu l'éloignant de la plaque dans la deuxième position de fonctionnement.

6. Véhicule selon la revendication 1, 2, 3, 4 ou 5, dans lequel, dans la deuxième position de fonctionnement, l'axe de roue se déplace vers une position juste au-delà d'une position centrale inférieure, et dans lequel une butée (75) est prévue sur le premier élément pour positionner le deuxième élément avec l'axe de roue dans la deuxième position de fonctionnement juste au-delà d'un point mort inférieur de telle sorte que des charges verticales sur la roue tendent à pousser le deuxième élément contre la butée.

7. Véhicule selon l'une quelconque des revendications précédentes, dans lequel le châssis comprend :
une partie de châssis avant (10) et une partie de châssis arrière (11) ;
les roues (50) étant fixées à la partie de châssis avant pour supporter la partie de châssis avant de telle sorte que la partie de châssis arrière soit supportée par rapport au sol uniquement à partir de la partie de châssis avant ;
la partie de châssis arrière comprenant des éléments de support (21, 22) montés sur la partie de châssis avant et agencés de manière à assurer un mouvement coulissant en avant et en arrière des éléments de support et de la partie de châssis arrière par rapport à la partie de châssis avant entre une position rétractée avant et une position déployée arrière ;
la partie de châssis arrière comprenant des éléments de châssis de support de charge arrière (23) agencés au-delà d'une extrémité arrière de la partie de châssis avant et agencés pour supporter une partie arrière d'une charge sur le véhicule ;
et la partie de châssis arrière comprenant, en plus des éléments de support (21, 22), un élément de châssis de support de charge avant (32) s'étendant depuis la partie de châssis arrière (23) vers l'avant de celle-ci de manière à être positionné, dans une position rétractée, au niveau d'une partie avant de la partie de châssis avant.

8. Véhicule selon l'une quelconque des revendications précédentes, comprenant en outre une aile (80) montée sur le châssis de véhicule pour recouvrir la roue pendant le transport, l'aile comprenant au moins une partie (81, 82) de celle-ci qui est montée pour un mouvement de pivotement autour d'un axe généralement horizontal (86) afin de se déplacer vers le haut avec la roue lorsque la roue entre en contact avec celle-ci.

9. Véhicule selon la revendication 8, dans lequel l'aile est constituée de deux parties (81, 82) divisées au niveau d'une ligne (88) au-dessus de la roue, montées chacune pour un mouvement de pivotement autour d'un axe de pivotement respectif (86), et dans lequel les parties comprennent un dispositif de blocage (95) pour bloquer les parties ensemble dans la position de transport.

10. Véhicule selon la revendication 8 ou 9, dans lequel le châssis comprend une partie d'extension (105) mobile longitudinalement au châssis, et dans lequel l'aile comprend une partie (104) montée sur la partie d'extension du châssis de manière à être mobile avec celle-ci vers une position espacée de la roue pour permettre le mouvement vers le haut de la roue.
